# EUROPEAN PATENT SPECIFICATION

(11) **EP 1 133 551 B1**
(45) Date of publication and mention of the grant of the patent: **26.05.2010**
(21) Application number: 99971027.0
(22) Date of filing: 22.10.1999
(51) Int. Cl.: C12C 1/18, A23L 1/29

(54) **PREPARATION OF WORT AND BEER OF HIGH NUTRITIONAL VALUE, AND CORRESPONDING PRODUCTS**
HERSTELLUNG VON WÜRZE UND BIER MIT HOHEM NÄHRWERT SOWIE ENTSPRECHENDE PRODUKTE
PREPARATION DE MOUT ET DE BIERE A VALEUR NUTRITIVE ELEVEE ET PRODUITS CORRESPONDANTS

(30) Priority: 26.10.1998 US 178840
(43) Date of publication of application: 19.09.2001
(73) Proprietor: FiBeer AB, 261 23 Landskrona (SE)
(72) Inventor: Triantafyllou Öste, Angeliki Dr, 226 49 Lund (SE)
(74) Representative: Thiel, Christian
(86) International application number: PCT/SE1999/001914
(87) International publication number: WO 2000/024864

(56) References cited:
- WO-A1-95/07628
- JP-A- 5 137 556
- JP-A- 10 120 704
- JP-A- 10 215 848

## Description

### FIELD OF THE INVENTION

The present invention relates to a process for the preparation of wort and beer of high nutritional value from oats and mixtures of oats and barley, and to corresponding products, in particular wort and beer of high nutritional value made from oats and mixtures of oats and barley.

### BACKGROUND OF THE INVENTION

Water soluble native β-glucan is of major nutritional interest. It is the chemical constituent of 'soluble dietary fiber', SDF, considered to be responsible for the association between oats products and reduced risk for coronary heart disease. In this context the term 'native' indicates that the carbohydrate has not been degraded enzymatically to a substantial extent during its isolation. A variety of health food products rich in SDF are currently on the market.

Oats is particularly rich in SDF. Oats SDF is documented as being particularly healthy. But also barley and other cereals contain SDF.

Conventional malting favors the presence of β-glucanase activity which either develops during the malting process or is caused by the addition of β-glucanase to the mash in order to facilitate filtration of the beer. Degradation of soluble β-glucan by β-glucanase results in loss of nutritional value.

D.T. Bourne and J.S. Pierce, Technical Quarterly vol.9, No.3, 151 to 157 discloses a wort and beer brewed from barley with high β-glucan contents. The beer making process includes a malting step.

### OBJECTS OF THE INVENTION

It is an object of the present invention to provide a process for the production of a beer of high nutritional value from cereals, in particular from oats, barley, and their mixtures.

It is another object of the invention to provide corresponding products, in particular high nutritional value wort and bear made from oats, barley, and their mixtures. 'High nutritional value' refers to a high content of soluble β-glucan obtained by preservation of a substantial portion of the soluble β-glucan contained in the raw material.

### SUMMARY OF THE INVENTION

The invention is based on the insight that conventional malting should be avoided when producing a cereal wort, in particular an oats or a mixed oats/barley wort, having a high content of soluble β-glucan. Avoidance of conventional malting prevents β-glucan degrading β-glucanase from being formed. In the brewing process of the invention the malting step is substantially modified. Instead of being produced or activated in a malting step, enzymes required for degrading starch and, optionally, protein, are added prior to or/and during the mashing step, imitating conventional malting but avoiding β-glucan degradation. The enzymes may be added in pure form but also in form of cereal derived materials containing substantial amounts of carbohydrates in addition to or instead of said enzymes.

'Conventional malting' is defined as process of germinating a a steeped cereal under controlled temperature conditions (about 15°C and 100% relative humidity) for a couple of days to make the corn produce starch and protein metabolizing enzymes; germination is stopped by gentle heating (kilning) under a flow of dry air to reduce humidity, whereupon the rootlets formed in the process are removed.

Modification of conventional malting according to the invention may consist in the complete omission of the germination step or in a substantial reduction thereof, providing incompletely germinated grain. The activation of various carbohydrate degrading enzymes does not proceed at the same rate from the start of germination. In particular, the rate of activation of amylolytic enzymes, such as α-amylase, develops substantially faster than that of β-glucanase. This allows to carry germination to a point at which substantial amylolytic activity has developed in the corn while β-glucanase activity is still insignificant or even cannot be detected at all. This optimum point, which is dependent on the cereal variety employed, germination temperature and humidity, etc., can be determined by monitoring the activity of the respective enzyme. The length of the germination phase thus should be selected to provide a partially germinated oats, barley or other cereal grain having substantial amylolytic activity while essentially lacking β-glucanase activity. 'Essentially lacking β-glucanase activity' signifies a degree activity which does not decrease the yield of soluble β-glucan by more than 20% by weight, more preferred 10% by weight, compared to the yield obtained from the corresponding source of non-germinated corn.

The modified malting process according to the invention comprising controlled malting and, optionally, selective enzyme inactivation, is useful in the production of cereal wort and cereal beer containing substantial amounts of soluble β-glucan while avoiding undesirable β-glucan degradation. The present invention also comprises a process for producing wort and beer rich in soluble β-glucan complying with regulatory requirements in various countries, such as the German 'purity law'.

According to the invention is disclosed a process for producing, from a cereal or mixture of cereals, in particular from one or several of rolled oats, rolled barley, oats flour, barley flour, fractions of such flours rich in β-glucan, incompletely germinated oats, and incompletely germinated barley, a boiled cereal wort having a high content of soluble β-glucan, in particular an oats or mixed oats/barley wort or beer.

The process of the invention for the production of a beer of the aforementioned kind, comprises the following steps:
- forming an aqueous cereal slurry containing from 10% to 30%, preferably from 15% to 25% by weight of a wet milled cereal or a mixture of wet milled cereals, such as rolled oats, rolled barley, heat treated oats flour, heat treated barley flour, incompletely germinated oats, incompletely germinated barley, and their mixtures, said materials lacking β-glucanase activity;
- mashing the slurry at a temperature above 50°C, preferably of 54-65°C, most preferred of about 58°C, in the presence of starch degrading enzymes, such as α-amylase, β-amylase, amyloglucosidase and pullulanase, and, optionally, protein degrading enzymes;
- cooling to a temperature below 50°C, preferably to about 40°C,
- removing insoluble material to form a wort;
- optionally, extracting the insoluble material with water and adding the extract to the wort;
- transferring the wort to a boiling tank, optionally to a storage tank before transferring it to said boiling tank;
- boiling the wort with hops according to taste at conditions sufficient to destroy all enzymatic activity, thereby forming a boiled wort;
- cooling the boiled wort to room temperature or lower, preferably to a temperature of about 10°C;
- optionally, adding a conventional malt wort boiled with hops to the boiled wort prior to or subsequent to cooling;
- adding a yeast culture;
- fermenting the mixture to produce a cereal beer having a high content of soluble β-glucan.

By stopping the process of the invention at an appropriate stage a wort, boiled with hops or not, can be produced.

This process for producing a wort having a high content of soluble β-glucan is also comprised by the invention.

A variation of the method according to the invention comprises adding a boiled conventional malt wort to the wort of the invention prior to boiling or adding the wort of the invention to a conventional boiled malt wort in the process of producing a beer having a high content of soluble β-glucan. By stopping this variant process according to the invention at an appropriate stage a mixed wort comprising the wort of the invention, boiled with hops or not, and a conventional boiled wort, can be produced. This process for producing such a 'mixed' wort having a high content of soluble β-glucan is also comprised by the invention.

The use of an oats flour fraction rich in β-glucan is preferred.

The process of the invention conserves most of soluble β-glucan found in the cereal, such as more than 50% thereof, since the enzymes used for the degradation of starch are essentially free from β-glucanase activity and since mainly the insoluble fibers are removed during the process. This leaves the β-glucan soluble dietary fibers in the wort. In traditional brewing SDF are degraded by the β-glucanase activity developing during malting.

In the process of the invention the added enzyme(s) degrade starch and proteins to small fermentable molecules. Starch degradation predominantly yields maltose and glucose, as well as small amounts of maltotriose. Protein degradation yields small peptides and amino acids. β-Amylase in combination with amyloglucosidase or α-amylase produces maltose and glucose. β-Amylase in combination with pullulanase produces maltose.
A combination of β-amylase, pullulanase, and amyloglucosidase produces glucose. α-Amylase in combination with amyloglucosidase produces large amounts of glucose. Any combination of these enzymes that yields a fermentable wort with essentially intact SDF can be used. The enzymes or part thereof need not be added as such but can be provided in form of cereal derived raw material containing them, including non-malted barley, barley or oats malted in a way so as to conserve certain enzyme activity, and conventional heat treated malt wort.

A particularly preferred process according to the invention for the production of a beer rich in soluble β-glucan, comprises the following steps:
- forming an aqueous oats slurry containing from 15% to 25% by weight of wet milled rolled oats, heat treated oats flour or incompletely germinated oats, said materials lacking β-glucanase activity;
- mashing the slurry at a temperature of about 58°C, in the presence of added one or several of β-amylase, amyloglucosidase, α-amylase, pullulanase, protease;
- cooling to a temperature below 50°C;
- removing solids to form a wort rich in soluble β-glucan;
- optionally, extracting the solid residue with water and adding the extract to the oats wort;
- transferring the oats wort to a boiling tank;
- boiling the oats wort with hops according to taste;
- cooling the boiled oats wort to room temperature or lower, preferably to a temperature of about 10°C;
- optionally, adding conventional malt wort boiled with hops before or after the boiling step;
- adding a yeast culture;
- fermenting the mixture to produce an oats bear having a high content of soluble β-glucan.

The process of the invention can be directly integrated into conventional brewing processes. The only equipment required in addition to that usually found on site is a device for the milling of barley and rolled oats if rolled oats is used instead of an oats flour fraction, a heat exchanger and a decanter centrifuge or similar separation equipment. Tanks are usually abundant at any brewery.

Accordingly , the present invention is also directed to a cereal beer containing a high amount of soluble β-glucan, including a beer made from a combination of the wort according to the invention and a traditional malted wort produced from other raw materials, such as a mixed wort containing more than 30%, preferably more than 50% of the wort according to the invention. A cereal beer of the invention produced solely from rolled oats or an oats flour fraction contains more than 0.3% by weight of soluble β-glucan, preferably more than 0.5%, and even more than 0.6%. A cereal beer made from a combination of worts contains at least a corresponding amount of soluble β-glucan, that is, an amount which is about proportional to the volume-% of the beer derived from oats wort; preferred is an amount of more than 0.2% by weight of soluble β-glucan.

Accordingly , the present invention is also directed to an oats wort containing more than 0.3% by weight of soluble β-glucan, preferably more than 0.5%, and even more than 0.6%. Also disclosed is a mixed wort containing at least an amount of soluble β-glucan corresponding to the proportion of the oats wort in the mixed wort; preferred is an amount of more than 0.2% by weight of soluble β-glucan.

The person skilled in the art will understand that, instead of oats alone or oats in combination with barley any suitable other cereal or mixture of cereals can be employed, such as maize, sorghum, rice, wheat, rye, and potato, the process of the invention being adapted to the requirements of the particular cereal or mixture of cereals used.

Where appropriate, 'cereal(s)' includes material(s) derived from a cereal or mixture of cereals. 'Effective amount' of a carbohydrate degrading enzyme is an amount sufficient to degrade at least 0.1 % of the glycosidic bonds of the starch contained in the starting material. 'Final product' refers to any product obtained in the process of the invention, such as a non-boiled oats wort; a final product can be stored for a shorter or longer time prior to being further treated. For a general background of brewing technology reference is made to T. O'Rourke: Brewing. Industrial Enzymology, 2nd Edition, p. 105-131, including further literature cited therein.

Further advantages of the invention are disclosed in the claims and will also be evident from a number of preferred embodiments of the invention.

### DESCRIPTION OF PREFERRED EMBODIMENTS

**Materials.** A commercial heat-treated oats flour fraction high in β-glucan, 'HAVREMJÖL C45', was obtained from Skåne-möllan (Tågarp, Sweden). Oats flour fractions high in β-glucan can be also be obtained by applying the teaching of US 5,063,078 (Frohse) to oats. Rolled oats is commercially available from Vårgårda (Sweden), Skåne-möllan, and other sources. β-Amylase (barley) was obtained from Genencor International, Inc. (Rochester, NY, USA) and Rhôdia Ltd. (Cheshire, UK). Pullulanase and α-amylase was obtained from Genencor or Novo Nordisk Nordisk, (Valby, Denmark). Amyloglucosidase was obtained from Novo Nordisk. Suitable proteases can be obtained from a variety of manufacturers.

**Example 1. Preparation of oats wort and oats beer from rolled oats.** Rolled oats are wet milled at a temperature of about 62° to yield a slurry which is transferred to a double mantled (for heating) stainless steel reaction tank provided with efficient stirring equipment. The proportion of oats to water can be varied within a wide range. For most applications a proportion of from about 15% w/v to about 25% w/v is appropriate. A combination of enzymes is employed which imitates the malting process used at the respective brewery. For instance, β-amylase is added at a dosage of from 10,000 to 22,000 Dp° per kg of oats, preferably of about 18,000 Dp° per kg of oats to initiate the degradation of starch to maltose. Pullulanase and/or amyloglucosidase is added to the slurry, each enzyme preparation at a dosage of 300-1,200 enzyme units per kg of oats to improve the fermentability of the wort. The temperature is lowered to about 57°C, and α-amylase is added at a dosage of from about 800 to about 5,000 amylase units per kg of oats, optimally of about 2,500 units per kg. After one hour's reaction the refractometer reading should be from about 6% to about 10%, preferably at least 8%, due to the production of maltose and glucose. Stirring of the slurry continues until a highly fermentable wort of about 12%, preferably of about 14% is obtained. Addition of iodine to a wort sample demonstrates that essentially all starch has been consumed.
Protease is added at a dosage of 3-12 protease units per kg of oats to further increase fermentability of the wort by producing amino acids and low molecular weight peptides later to be consumed for yeast growth. A reaction period of about 30 min will usually be sufficient for the action of protease.
Stirring is stopped and the solids are left to settle in the reaction tank while the wort is emptied from its top and cooled to 40°C in a heat exchanger. The solids are continuously removed by a decanter centrifuge. To provide for quantitative extraction of SDF water (1 liter/kg of oats) is added to the residue remaining in the reaction tank. The slurry is stirred and pumped through the decanter into the boiling tank. The thus prepared oats wort is boiled with hops, for example 2 g - 5 g of hops per kg of oats, for about 70 min. The boiled wort is cooled to 10°C, and yeast is added.
The same procedure has been employed for producing a boiled barley wort from a corresponding amount of rolled barley.

Optionally the oats or barley wort thus obtained (boiled or not boiled) is mixed with a traditional barley malt wort (boiled with hops), for instance with an equal volume thereof.
A typical beer prepared with equal amounts of oat wort according to the invention and traditional barley malt wort (lager) contains 4.8% by volume of alcohol, has a color of at least 8.0 EBC, a pH value of 5.0 and a bitterness of about 13-14 EBU. The sugar content of the mixed wort was about 1.2%. The β-glucan content of the oats wort was 0.62%.

**Example 2. Preparation of oats wort and oats beer from an oats flour fraction.** A heat treated oats flour fraction (Skåne-möllan) is used instead of the rolled oats of Example 1. The oats flour fraction is suspended in water in a concentration of about 20-30 % w/v at a temperature of 58-65°C. For the rest the process of Example 1 is followed.
The same procedure is applicable to the preparation of cereal wort or beer according to the invention from cereal flour, in particular barley flour.

**Example 3. Preparation of a ready-to-use enzyme enriched oats flour composition.** The enzymes of Example 1 are thoroughly mixed in a double cone blender with a corresponding amount of an oats flour fraction high in β-glucan. The water content of the preparation should be the same or lower than that of commercial air dry oats flour to assure good storing properties. Addition of warm water restores enzyme activity. Other cereal flour than oats flour may be used, for instance barley flour, to obtain a corresponding enzyme enriched cereal flour composition.

**Example 4. Preparation of a mixed oats/barley wort in the absence of added enzymes.** Heat treated oats flour (Skåne-möllan) and/or mildly malted and optionally heat treated oats, and milled or crushed barley (barley grits) malted under mild conditions (about 10% or more of total solids) are mixed in a tank. The barley malt supplies β-amylase activity (approximately 50-80 DP°/g). Its malting conditions were selected to avoid production of β-glucanase activity. This can be achieved by either using short malting times or selective β-glucanase inactivation by heat treating the malt. In a second tank conventional malting of barley takes place.

The malt extract, that is, the liquid phase from the barley malting tank, contains a variety of enzymes among which β-glucanase is detrimental for the desired product. Therefore it is heat treated by means of a heat exchanger to ensure inactivation of β-glucanase prior to adding it to the barley/ oats malt slurry tank. β-glucanase is less stable to heat than α-amylase. The partial loss of β-amylase during the heat treatment can be compensated for by adding the aforementioned milled (crushed) and specially malted barley to the oats.
Otherwise the process is carried out as in Example 1 and with corresponding amounts of raw materials and additives.

## Claims

1. A process for the production of a boiled cereal wort having a content of more than 0.2% by weight of soluble β-glucan from oats or a mixture of oats and barley selected from one or several of rolled oats, rolled barley, oats flour, barley flour, fractions of such flours rich in β-glucan, incompletely germinated oats, incompletely germinated barley, said materials employed in the process lacking β-glucanase activity, comprising the following steps:
- forming an aqueous cereal slurry containing from 10% by weight to 30% by weight of at least one wet or dry milled cereal which lacks β-glucanase activity;
- mashing the slurry at a temperature above 50°C in the presence of starch degrading enzymes;
- cooling to a temperature below 50°C;
- removing insoluble material to form a wort,
- boiling the cereal wort with hops at conditions sufficient to destroy all enzymatic activity, thereby forming a boiled wort.

2. The process of claim 1, including the step of combining boiled malt wort with said cereal wort prior to boiling.

3. The process of claim 1, including the step of heat treating the cereal sufficiently to inactivate essentially all β-glucanase contained therein.

4. The process of claim 1, wherein the mashing temperature is from 54 to 65°C.

5. The process of claim 1, wherein the process conditions are controlled such that more than 50% of soluble β-glucan contained in the cereal is preserved in the final product.

6. The process of claim 1, wherein the starch degrading enzyme is amylase, optionally in combination with pullulanase or amyloglucosidase or both.

7. A process for the production of a cereal bear having a content of more than 0.2% by weight of soluble β-glucan from the wort of any of claims 1-6, comprising the following steps:
- providing a boiled wort at room temperature or lower;
- adding yeast to the boiled wort;
- fermenting the mixture to produce a cereal beer having a high content of soluble β-glucan.

## Patentansprüche

1. Verfahren für die Produktion einer gekochten Getreidewürze, welche einen Gehalt von mehr als 0,2 Gew.-% lösliches β-Glucan aus Hafer oder einer Mischung aus Hafer und Gerste, ausgewählt aus einem oder mehreren von gewälztem Hafer, gewälzter Gerste, Hafermehl, Gerstenmehl, Fraktionen von solchen β-Glucanreichen Mehlen, unvollständig gekeimtem Hafer, unvollständig gekeimter Gerste, hat, wobei diesen, in dem Verfahren verwendeten Materialien β-Glucanase-Aktivität fehlt, mit den folgenden Schritten:
- Formen eines wässerigen Getreidebreis, enthaltend 10 Gew.-% bis 30 Gew.-% zumindest eines feucht oder trocken gemahlenen Getreides, welchem β-Glucanase-Aktivität fehlt;
- Maischen des Breis bei einer Temperatur über 50°C in der Gegenwart von Stärke abbauenden Enzymen;
- Kühlen auf eine Temperatur unter 50°C;
- Entfernen unlöslichen Materials zum Formen einer Würze;
- Kochen der Getreidewürze mit Hopfen unter Bedingungen, welche ausreichen, jegliche enzymatische Aktivität zu zerstören, durch Formen einer gekochten Würze.

2. Verfahren nach Anspruch 1, mit dem Schritt gekochte Malzwürze mit der Getreidewürze vor dem Kochen zu verbinden.

3. Verfahren nach Anspruch 1, mit dem Schritt das Getreide, ausreichend mit Wärme zu behandeln, um im Wesentlichen jegliche darin enthaltene β-Glucanase zu inaktivieren.

4. Verfahren nach Anspruch 1, wobei die Maischtemperatur zwischen 54°C und 65°C liegt.

5. Verfahren nach Anspruch 1, wobei die Verfahrensbedingungen so kontrolliert werden, dass mehr als 50 % des in dem Getreide enthaltenen, löslichen β-Glucans in dem Endprodukt bewahrt wird.

6. Verfahren nach Anspruch 1, wobei das Stärke abbauende Enzym Amylase ist, optional in Verbindung mit Pullulanase oder Amyloglucosidase oder beiden.

7. Verfahren für die Erzeugung eines Getreidebiers, welches einen Gehalt von mehr als 0,2 Gew.-% lösliches β-Glucan aus der Würze nach einem der Ansprüche 1 bis 6 hat, wobei das Verfahren folgende Schritte aufweist:
- Bereitstellen einer gekochten Würze bei Raumtemperatur oder darunter;
- Hinzufügen von Hefe zu der gekochten Würze;
- Fermentieren der Mischung zum Erzeugen eines Getreidebiers, welches einen hohen Gehalt lösliches β-Glucan hat.

## Revendications

1. Procédé de production d'un moût de céréales bouilli, ayant une teneur en β-glucane soluble supérieure à 0,2 % en poids, à partir d'avoine ou d'un mélange d'avoine et d'orge choisi à un ou plusieurs parmi les flocons d'avoine, les flocons d'orge, la farine d'avoine, la farine d'orge, des fractions de farines riches en β-glucane, de l'avoine incomplètement germée, de l'orge incomplètement germé ; lesdites matières utilisées dans le procédé ne présentant pas d'activité de β-glucanase, comprenant les étapes consistant à :
- former une bouillie aqueuse de céréales contenant de 10 % en poids à 30 % en poids d'au moins une céréale broyée, sèche ou humide, qui ne présente pas d'activité de β-glucanase ;
- écraser la bouillie, à une température supérieure à 50°C, en présence d'enzymes dégradant l'amidon ;
- refroidir à une température inférieure à 50°C,
- extraire les matières insolubles pour former un moût,
- bouillir la bouillie de céréales avec du houblon dans des conditions suffisantes pour détruire toute activité enzymatique, formant ainsi un moût bouilli.

2. Procédé selon la revendication 1, comprenant l'étape consistant à combiner du moût de malt bouilli avec ledit moût de céréales avant l'ébullition.

3. Procédé selon la revendication 1, comprenant l'étape consistant à traiter la céréale à chaud suffisamment pour inactiver, pour l'essentiel, toute la β-glucanase qu'elle contient.

4. Procédé selon la revendication 1, dans lequel la température d'écrasement est de 54 à 65°C.

5. Procédé selon la revendication 1, dans lequel les conditions du procédé sont contrôlées de sorte que plus de 50 % du β-glucane soluble contenu dans la céréale soient conservés dans le produit final.

6. Procédé selon la revendication 1, dans lequel l'enzyme dégradant l'amidon est l'amylase, en option en combinaison avec la pullulanase ou l'amyloglucosidase, ou les deux.

7. Procédé de production d'une bière aux céréales ayant une teneur en β-glucane soluble supérieure à 0,2 % en poids à partir du moût, selon l'une quelconque des revendications 1 à 6, comprenant les étapes consistant à :
- fournir un moût bouilli à la température ambiante ou au-dessous ;
- ajouter de la levure au moût bouilli ;
- laisser fermenter le mélange pour obtenir une bière aux céréales ayant une forte teneur en β-glucane soluble.
